# EUROPEAN PATENT SPECIFICATION

(11) **EP 0 974 474 B1**
(45) Date of publication and mention of the grant of the patent: **16.02.2005**
(21) Application number: 99113693.8
(22) Date of filing: 16.07.1999
(51) Int. Cl.: B60F 3/00

(54) **Improved auxiliary flotation, propulsion and steering apparatus for multipurpose vehicles having an amphibian function**
Verbesserte Zusatzauftrieb-, Antriebs- und Lenkungsvorrichtung für Mehrzweckfahrzeuge wie ein Amphibienfahrzeug
Dispositif additionnel de flottaison, de propulsion et de direction pour véhicules multifonctionnels tels que véhicules amphibies

(30) Priority: 24.07.1998 IT TO980135
(43) Date of publication of application: 26.01.2000
(73) Proprietor: A.R.I.S. S.p.A., 10040 Lombardore, Turin (IT)
(72) Inventor: Bellezza Quater, Giorgio, 10040 Lombardore (Torino) (IT); Bellezza Quater, Paolo, 10077 S. Maurizio Canavese (Torino) (IT); Bellezza Quater, Silvia, 10077 S. Maurizio Canavese (Torino) (IT)
(74) Representative: Modiano, Guido, Dr.-Ing.

(56) References cited:
- EP-A- 0 872 366
- EP-A- 0 970 824
- US-A- 3 603 278
- US-A- 3 765 367
- US-A- 4 257 505

## Description

The present invention relates to an improved auxiliary flotation, propulsion and steering apparatus for multipurpose vehicles having an amphibian function, particularly tracked or wheeled carrier vehicles having a hull-like structure with watertight characteristics, adapted to give them limited amphibian capabilities, such as the ability to cross waterways with the vehicle resting on the underlying bed and also to travel in swampy but shallow and calm water.

More particularly, the present invention relates to an auxiliary apparatus, adapted to significantly improve the amphibian capabilities of the vehicles, of the type which comprises a forward auxiliary flotation section and a stern auxiliary flotation section, both of which are constituted by watertight metallic containers filled with foamed materials which are detachably associated with the hull of the vehicle, and wherein the forward section has profiled submerged surfaces so as to generate hydrodynamic lift and the stem section, or alternatively the forward section, include a pair of propulsion and steering propellers of the ducted type. Such auxiliary apparati are disclosed in EP-A-0 842 366 and EP-A-0 970 824, respectively, whose content is considered as comprised in the state of the art according to Art. 54(3) EPC.

The present invention, in order to further improve the performance of the amphibian vehicle arising from the use of the auxiliary apparatus, relates to an improvement to the apparatus which consists of the fact that both the forward and stern flotation sections have respective pairs of ducted propellers which can be actuated simultaneously or selectively; the axes of the ducts of the forward propellers diverging and being inclined downward, the axes of the ducts of the stern propellers converging and being substantially parallel to the waterline.

The invention is defined in claim 1; further features of the invention are disclosed in the dependent claims.

The propellers of both sections are actuated by respective hydraulic motors which are supplied by a corresponding pair of hydraulic pumps, preferably arranged in a tandem configuration.

This improved arrangement significantly improves the maneuvering capabilities of the vehicle during navigation or, more generally, in static and dynamic flotation conditions; moreover, the vehicle has, for equal overall dimensions, better distributed and significantly increased propulsion power which also allows it to easily tow other vessels, for example barges or pontoons and floating elements in general.

The invention is now described in detail with reference to the accompanying drawings, wherein:
Figure 1 is an elevation view of a multipurpose vehicle of the M113 type, with the improved auxiliary apparatus according to the present invention;

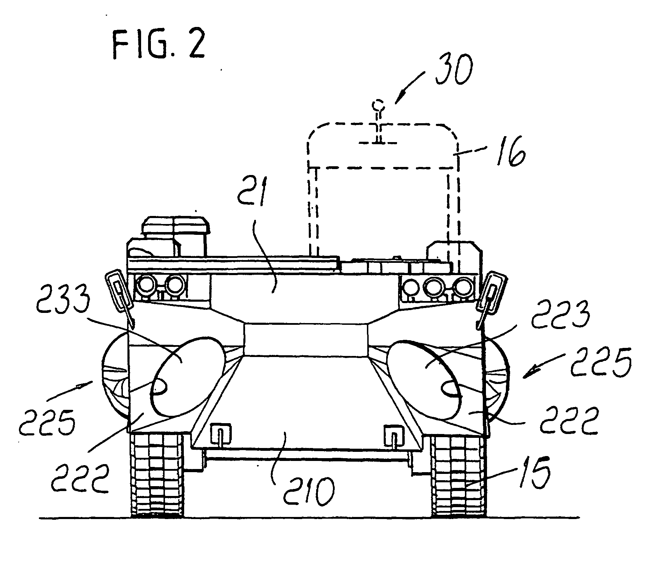

Figure 2 is a front view of the vehicle of Figure 1;
Figure 3 is a schematic plan view of the vehicle of Figure 1, illustrating in detail the orientation of the axis of the ducted propellers and the arrangement of the hydraulic means for actuating the propellers.

In the drawings, 10 designates an all-purpose tracked vehicle, of the type known by the code M133, which comprises a watertight hull-like structure 11 with a loading platform 12, a heat engine unit (not shown) which drives in a known manner the pinions 14 for moving the tracks 15, and a control post, generally designated by the reference numeral 16.

The reference numeral 20 generally designates the auxiliary structure according to the invention, which is substantially composed of a forward auxiliary flotation section 21 and a stern auxiliary flotation section 22. Said flotation sections are constituted by watertight metallic containers, preferably made of aluminum alloy, whose watertight cavity is filled with foamed and/or expanded polymeric material and are detachably connected in a known manner to the hull 11 of the vehicle 10.

The forward section 21 is provided with submerged surfaces 210 which are profiled so as to produce hydrodynamic lift when the vehicle is navigating, and according to the invention both the forward section 21 and the stern section 22 include respective pairs of propulsion propellers 220-221 of the ducted type, which can be actuated independently or simultaneously and are arranged symmetrically with respect to the longitudinal vertical centerline plane of the vehicle 10.

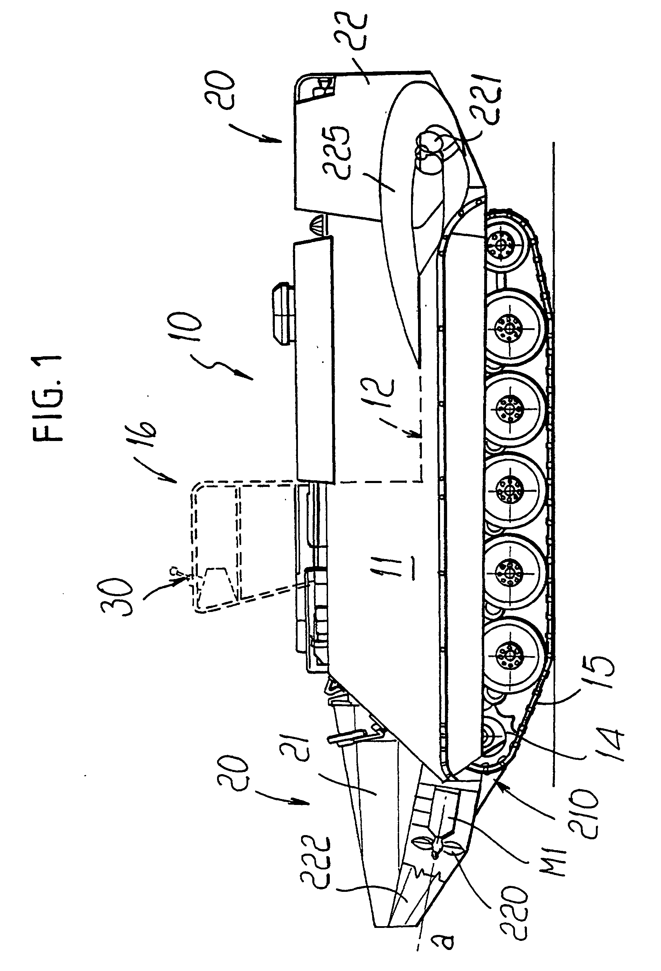

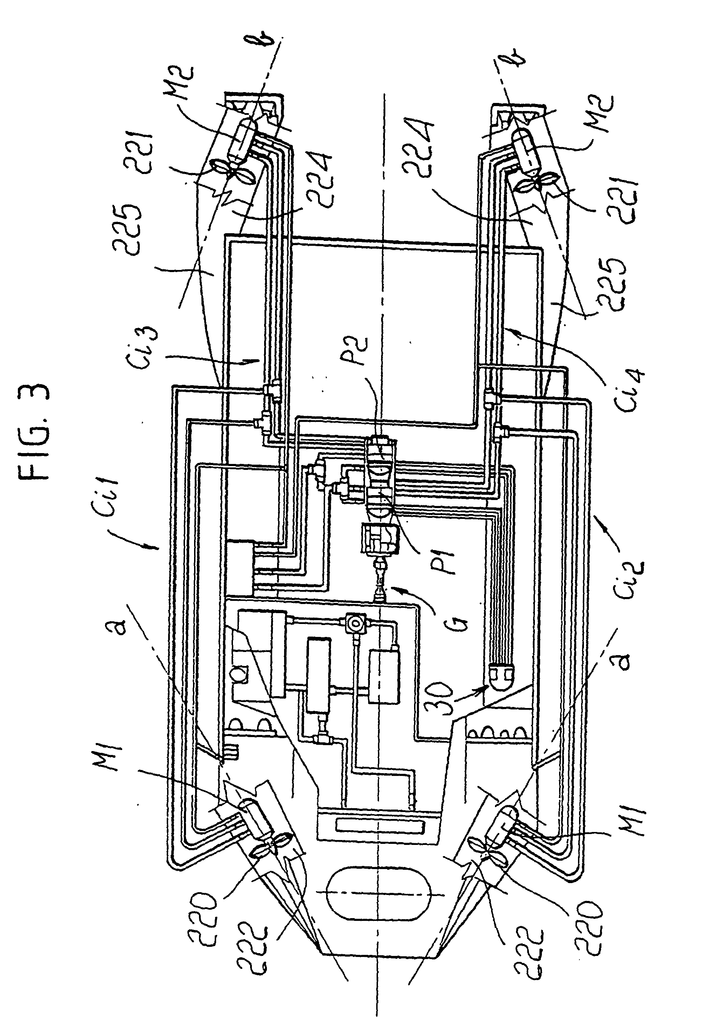

As clearly shown in Figures 1 and 3, the ducts 222 that contain the forward propellers 220 have, with respect to the direction of the water jet produced by said propellers, front hydrodynamic intakes 223 and axes "a" which are inclined downward so as to produce a water jet which has upward vertical thrust components which constitute auxiliary actions for supporting the vehicle 10.

The axes "a" of the ducts 222 are also arranged so as to diverge, in order to produce jets with lateral thrust components which facilitate the steering of the vehicle when the propellers 220 are actuated selectively for maneuvering.

Viceversa and preferably, the axes "b" of the ducts 224 that contain the stern propellers 221 converge, are substantially parallel to the waterline and intersect in a point which lies on the vertical centerline plane of the vehicle abaft the stern section, preferably at a distance from the (ideal) transom which is greater than, or equal to, the axial length of the entire vehicle 10.

The ducts 224 are in turn provided with hydrodynamic intakes 225 located substantially to the sides of the hull 11. Each pair of forward and stern propellers is driven by a corresponding forward and stern pair of hydraulic motors M1-M2 of the reversible variable-displacement type, and according to the invention the forward and stern motors located at one side of the vehicle are supplied by a corresponding hydraulic pump P1 and the motors located at the other side are supplied by another pump P2; the two pumps P1-P2 being connected in a tandem configuration and being driven, in a known manner by way of a coupling G, by the heat engine unit installed on the vehicle 10.

Each pump is connected to the respective pair of forward and stern motors by means of corresponding hydraulic circuits Ci1-Ci2-Ci3-Ci4, each of which comprises, in a per se known manner, two pressurized pipes, respectively for delivery and return, and a third drainage duct. The pipes of said hydraulic circuits run at least partly outside the hull 11 and below the waterline, so as to be vigorously cooled by the surrounding water.

A control bar 30, preferably of the type commonly known as joystick, is provided at the control post 16 in a raised position in order to activate the pairs of corresponding forward and stern propellers simultaneously for propulsion or selectively for steering.

The effects of the present model of course apply to models which achieve equal utility by using the same inventive concept.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An improved auxiliary flotation, propulsion and steering apparatus for multipurpose vehicles having an amphibian function, of the type comprising a forward auxiliary flotation section (21) and a stern auxiliary flotation section (22) which are detachably associated with the hull (11) of the vehicle (10) and wherein the forward section (21) has submerged surfaces (210) which are profiled so as to produce hydrodynamic lift, whereby both the forward auxiliary flotation section (21) and the stern auxiliary flotation section (22) have respective pairs of ducted propellers (220-221) which can be actuated simultaneously or selectively.

2. The apparatus according to claim 1, whereby the axes (a) of the ducts (222) of the forward propellers (220) diverge and are inclined downward and the axes (b) of the ducts (224) of the stern propellers (221) converge and are substantially parallel to the waterline.

3. The apparatus according to claims 1 and 2, whereby the forward and stern propellers (220-221) are driven by respective hydraulic motors (M1-M2) which are supplied by two hydraulic pumps (P1-P2) which are connected in a tandem configuration and are driven by the heat engine unit of the vehicle (10).

4. The apparatus according to the preceding claims, whereby each forward and stern motor (M1-M2) is connected to the respective pump (P1-P2) by means of a corresponding hydraulic circuit (Ci1-4) and in that the hydraulic circuits run at least partly outside the hull (11) of the vehicle (10) so as to be cooled by the surrounding water.

5. The apparatus according to the preceding claims, whereby it comprises a control bar (30) which is provided at the control post (16) in order to drive the pairs of forward and stern propellers (220-221) simultaneously for propulsion or selectively for steering.

## Patentansprüche

1. Verbesserte Zusatzauftriebs-, -antriebs- und -lenkvorrichtung für Mehrzweckfahrzeuge mit Amphibienfunktion von der Art, die einen Zusatz-Bugauftriebsabschnitt (21) und einen Zusatz-Heckauftriebsabschnitt (22) umfasst, die lösbar mit dem Rumpf (11) des Fahrzeugs (10) verbunden sind, und bei welcher der Bugabschnitt (21) eingetauchte Flächen (210) mit einem derartigen Profil aufweist, dass diese einen hydrodynamischen Auftrieb erzeugen, wobei sowohl der Zusatz-Bugauftriebsabschnitt (21) als auch der Zusatz-Heckauftriebsabschnitt (22) jeweils ein Paar Schrauben (220-221) in Leitkanalbauweise aufweisen, die gleichzeitig oder selektiv betätigbar sind.

2. Vorrichtung nach Anspruch 1, wobei die Achsen (a) der Leitkanäle (222) der Schrauben (220) am Bug auseinander laufen und nach unten geneigt sind, und die Achsen (b) der Leitkanäle (224) der Schrauben (221) am Heck auf einander zu und im Wesentlichen parallel zur Wasserlinie verlaufen.

3. Vorrichtung nach den Ansprüchen 1 und 2, wobei die Schrauben (220-221) am Bug und am Heck von entsprechenden Hydraulikmotoren (M1-M2) angetrieben werden, die über zwei Hydraulikpumpen (P1-P2) versorgt werden, die in einer Anordnung hintereinander verbunden sind und durch die Wärmemotoreinheit des Fahrzeugs (10) angetrieben werden.

4. Vorrichtung nach den vorhergehenden Ansprüchen, wobei jeder Bugmotor und Heckmotor (M1-M2) jeweils mit der jeweiligen Pumpe (P1-P2) mittels eines entsprechenden Hydraulikkreises (Ci1-4) verbunden sind und bei welcher die Hydraulikkreise zumindest teilweise außerhalb des Rumpfes (11) des Fahrzeugs (10) verlaufen, so dass sie durch das sie umgebende Wasser gekühlt werden.

5. Vorrichtung nach den vorhergehenden Ansprüchen, wobei diese eine Steuerstange (30) aufweist, die an der Steuerstation (16) zum Antreiben der Paare von Schrauben (220-221) am Bug und am Heck gleichzeitig für den Vortrieb oder selektiv zum Lenken vorgesehen ist.

## Revendications

1. Un appareil perfectionné de direction, de propulsion et de flottaison auxiliaire pour des véhicules multi-fonctions ayant une fonction amphibie, de type comprenant une partie de flottaison auxiliaire avant (21) et une partie de flottaison auxiliaire arrière (22), qui sont associées de manière détachable avec une coque (11) du véhicule (10) et dans lequel la partie avant (21) a des surfaces immergées (210) qui sont réalisées pour produire un lift hydrodynamique, dans lequel la partie de flottaison auxiliaire avant (21) et la partie de flottaison auxiliaire arrière (22) ont des paires d'hélices carénées respectives (220, 221) qui peuvent être actionnées simultanément ou de manière sélective.

2. L'appareil selon la revendication 1, dans lequel les axes (a) des conduits (222) des hélices avant (220) divergent et sont inclinés vers le bas et les axes (b) des conduits (224) des hélices arrière (221) convergent et sont sensiblement parallèles à la surface de l'eau.

3. L'appareil selon les revendications 1 et 2, dans lequel les hélices avant et arrière (220, 221) sont entraînées par des moteurs hydrauliques respectifs (M1, M2) qui sont alimentés par deux pompes hydrauliques (P1, P2) qui sont connectées dans une configuration en tandem et sont entraînées par l'unité de moteur thermique du véhicule (10).

4. L'appareil selon les revendications précédentes, dans lequel chaque moteur avant et arrière (M1, M2) est connecté à la pompe respective (P1, P2) au moyen d'un circuit hydraulique correspondant (Ci1-4) et dans lequel les circuits hydrauliques s'étendent au moins en partie en dehors de la coque (11) du véhicule (10) de façon à être refroidis par l'eau qui l'entoure.

5. L'appareil selon les revendications précédentes, comprenant une barre de contrôle (30) qui est disposée au poste de contrôle (16) pour conduire les paires d'hélices avant et arrière (220, 221) simultanément pour la propulsion ou de manière sélective pour la direction.
